# FASCICULE DE BREVET EUROPEEN

(11) **EP 3 383 928 B1**
(45) Date de publication et mention de la délivrance du brevet: **08.09.2021**
(21) Numéro de dépôt: 16819134.4
(22) Date de dépôt: 30.11.2016
(51) Int. Cl.: C08F 210/02, C08F 4/54

(54) **SYSTEME CATALYTIQUE PREFORME COMPRENANT UN METALLOCENE DE TERRE RARE**
SYSTEM MIT KATALYTISCHER VORFORM MIT EINE SELTENERD-METALLOCEN
CATALYTIC PREFORM SYSTEM COMPRISING A RARE EARTH METALLOCENE

(30) Priorité: 03.12.2015 FR 1561770
(43) Date de publication de la demande: 10.10.2018
(73) Titulaire: Compagnie Générale des Etablissements Michelin, 63000 Clermont-Ferrand (FR)
(72) Inventeur: LAFAQUIERE, Vincent, 63040 CLERMONT-FERRAND Cedex 9 (FR); THUILLIEZ, Julien, 63040 CLERMONT-FERRAND Cedex 9 (FR)
(74) Mandataire: Gandon-Pain, Sylvie
(86) Numéro de dépôt international: PCT/FR2016/053137
(87) Numéro de publication internationale: WO 2017/093654

(56) Documents cités:
- EP-A1- 1 092 731
- WO-A2-2007/054223
- WO-A2-2007/054224
- US-A- 3 794 604

## Description

La présente invention concerne un système catalytique préformé à base de métallocènes de terre rare, notamment utilisable dans la polymérisation des monomères tels que les diènes conjugués, l'éthylène, les α-monooléfines et leurs mélanges. L'invention porte également sur un procédé de préparation dudit système catalytique, ainsi que son utilisation dans la synthèse de polymères.

Les systèmes catalytiques à base de métallocènes de terre rare sont connus : ils sont par exemple décrits dans les demandes de brevet EP 1 092 731, WO 2004035639 et WO 2007054224 au nom des Demanderesses pour être utilisés dans la polymérisation de monomères tels que les diènes conjugués, l'éthylène et les α-monooléfines. Ils sont le produit de réaction d'un métallocène de lanthanide et d'un co-catalyseur dans un solvant hydrocarboné. Ces systèmes catalytiques, ainsi formés, ont l'inconvénient de voir leur activité catalytique diminuer au stockage. Pour garantir les spécifications du polymère à synthétiser, il est alors nécessaire dans le procédé de polymérisation de compenser les fluctuations de l'activité catalytique du système catalytique qui résultent de son stockage. Cette compensation passe par le réajustement des paramètres du procédé de polymérisation tels que les quantités respectives des monomères et du système catalytique. Il s'en suit qu'une phase de réglage des paramètres du procédé de polymérisation et une phase de mise en stabilité de l'outil de polymérisation sont requises avant que l'outil ne soit en mesure de produire le polymère en spécification. Ces phases de réglage et de mise en stabilité ont pour effet de diminuer la productivité de l'outil de production.

Pourtant, certains de ces systèmes catalytiques sont d'intérêt dans la mesure où ils permettent d'accéder à des copolymères d'éthylène et de 1,3-butadiène de microstructure originale, du fait de la formation de motifs cycliques dans la chaîne copolymère, copolymères d'intérêt pour être utilisés dans des formulations de caoutchouc pour l'application pneumatique, tels que décrits dans la demande de brevet WO 2014114607 au nom des Demanderesses. Il est donc d'intérêt de trouver une solution pour améliorer la stabilité dans le temps de l'activité catalytique de ces systèmes catalytiques, notamment la stabilité au stockage.

Les Demanderesses, poursuivant leurs efforts, ont découvert un système catalytique à base d'un métallocène de terre rare présentant une stabilité de l'activité catalytique améliorée au stockage, ce qui permet de résoudre les problèmes rencontrés mentionnés précédemment. Le système catalytique selon l'invention a la particularité d'être un système catalytique de type « préformé ».

Ainsi, un premier objet de l'invention est un système catalytique préformé à base au moins :
- d'un monomère diène conjugué de préformation
- d'un métallocène de formule (I)
- d'un composé organométallique à titre de co-catalyseur,

   {P(Cp¹)(Cp²)Y} (I)
- Y désignant un groupe comportant un atome de métal qui est une terre rare,
- Cp¹ et Cp², identiques ou différents, étant choisis dans le groupe constitué par les groupes fluorényles, les groupes cyclopentadiényles et les groupes indényles, les groupes étant substitués ou non substitués,
- P étant un groupe pontant les deux groupes Cp¹ et Cp², et comprenant un atome de silicium ou de carbone.

L'invention concerne aussi un procédé pour préparer le système catalytique conforme à l'invention.

L'invention porte également sur un procédé de préparation d'un polymère qui comprend la polymérisation d'un monomère en présence du système catalytique conforme à l'invention.

### I. DESCRIPTION DETAILLEE DE L'INVENTION

Dans la présente description, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants du système catalytique, on entend le mélange de ces constituants, ou le produit de la réaction d'une partie ou de la totalité de ces constituants entre eux.

Dans la présente demande, on entend par métallocène un complexe organométallique dont le métal, en l'espèce l'atome de terre rare, est lié à une molécule de ligand constitué de deux groupes Cp¹ et Cp² reliés entre eux par un pont P. Ces groupes Cp¹ et Cp², identiques ou différents, sont choisis dans le groupe constitué par les groupes fluorényles, les groupes cyclopentadiényles et les groupes indényles, ces groupes pouvant être substitués ou non substitués. On rappelle que les terres rares sont des métaux et désignent les éléments scandium, yttrium et les lanthanides dont le numéro atomique varie de 57 à 71.

Le système catalytique conforme à l'invention a pour caractéristique essentielle d'être un système catalytique préformé à partir d'un monomère diène conjugué. Le monomère diène conjugué de préformation peut être un diène conjugué ayant de 4 à 8 atomes de carbone, de préférence un 1,3-diène, de manière plus préférentielle le 1,3-butadiène.

Le monomère diène conjugué de préformation est utilisé de préférence selon un rapport molaire (monomère diène conjugué de préformation / métal du métallocène) allant de 5 à 1000, préférentiellement de 10 à 500.

Le métallocène utilisé comme constituant de base dans le système catalytique conforme à l'invention répond à la formule (I)

{P(Cp¹)(Cp²)Y} (I)

dans laquelle
- Y désigne un groupe comportant un atome de métal qui est une terre rare,
- Cp¹ et Cp², identiques ou différents, sont choisis dans le groupe constitué par les groupes fluorényles, les groupes cyclopentadiényles et les groupes indényles, les groupes étant substitués ou non substitués,
- P est un groupe pontant les deux groupes Cp¹ et Cp², et comprenant un atome de silicium ou de carbone.

Dans la formule (I), l'atome de terre rare est relié à une molécule de ligand constitué des deux groupes Cp¹ et Cp² reliés entre eux par le pont P.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

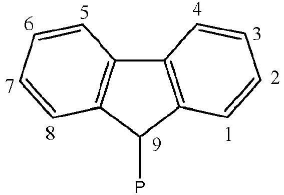

A titre de groupes cyclopentadiényles substitués, on peut citer particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

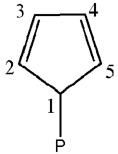

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

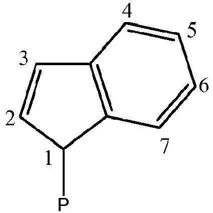

Selon un mode de réalisation préférentiel de l'invention, Cp¹ et Cp² sont identiques et sont choisis dans le groupe constitué par les groupes fluorényles substitués et le groupe fluorényle non substitué de formule C₁₃H₈.

Le système catalytique selon ce mode de réalisation préférentiel a la particularité de conduire à des copolymères de butadiène et d'éthylène qui comprennent en plus des unités monomères éthylène et des unités butadiène des unités cycliques 1,2-cyclohexane de formule suivante :

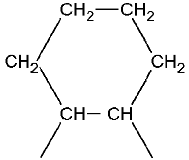

Avantageusement, Cp¹ et Cp² sont identiques et représentent chacun un groupe fluorényle non substitué de formule C₁₃H₈, représenté par le symbole Flu.

Selon un mode de réalisation préférentiel de l'invention, le symbole Y représente le groupe Met-G, avec Met désignant un atome de métal qui est une terre rare et avec G désignant un groupe comprenant le motif borohydrure BH₄ ou désignant un atome d'halogène X choisi dans le groupe constitué par le chlore, le fluor, le brome et l'iode. Avantageusement, G désigne le chlore ou le groupe de formule (II) :

(BH₄)_{(1+y)}-L_{y}-Nₓ (II)

dans laquelle
- L représente un métal alcalin choisi dans le groupe constitué par le lithium, le sodium et le potassium,
- N représente une molécule d'un éther,
- x, nombre entier ou non, est égal ou supérieur à 0,
- y, nombre entier, est égal ou supérieur à 0.

Comme éther convient tout éther qui a le pouvoir de complexer le métal alcalin, notamment le diéthyléther et le tétrahydrofuranne.

Selon l'un quelconque des modes de réalisation de l'invention, le métal du métallocène utile au besoin de l'invention, en l'espèce la terre rare, est de préférence un lanthanide dont le numéro atomique va de 57 à 71, de manière plus préférentielle le néodyme, Nd.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z désigne avantageusement un atome de silicium, Si.

Selon un mode de réalisation particulièrement préférentiel, le métallocène est le borohydrure de diméthylsilyl bis-fluorényle néodyme de formule (III) :

[Me₂Si(Flu)₂Nd(µ-BH₄)₂Li(THF)] (III)

dans laquelle Flu représente le groupe C₁₃H₈.

Un autre constituant de base du système catalytique conforme à l'invention est le co-catalyseur capable d'activer le métallocène vis-à-vis de la polymérisation, notamment dans la réaction d'amorçage de polymérisation. Le co-catalyseur est de manière bien connu un composé organométallique. Peuvent convenir les composés organométalliques capables d'activer le métallocène, tels que les composés organomagnésiens, organoaluminiques et organolithiens.

Le co-catalyseur est préférentiellement un organomagnésien, c'est-à-dire un composé qui présente au moins une liaison C-Mg. A titre de composés organomagnésiens on peut citer les diorganomagnésiens, en particulier les dialkylmagnésiens et les halogénures d'organomagnésien, en particulier les halogénures d'alkylmagnésien. Le composé diorganomagnésien présente deux liaisons C-Mg, en l'espèce C-Mg-C; l'halogénure d'organomagnésien présente une liaison C-Mg. De manière plus préférentielle, le co-catalyseur est un diorganomagnésien.

Selon un mode de réalisation particulièrement préférentiel de l'invention, le co-catalyseur est un composé organométallique comportant un groupe alkyle lié à l'atome de métal. A titre de co-catalyseur, également appelé agent d'alkylation, conviennent particulièrement les alkylmagnésiens (également appelés alkylmagnésium), tout particulièrement les dialkylmagnésiens (également appelés dialkylmagnésium) ou les halogénures d'alkylmagnésien (également appelés halogénures d'alkylmagnésium), comme par exemple le butyloctylmagnésium et le chlorure de butylmagnésium. Le co-catalyseur est avantageusement le butyloctylmagnésium.

Le co-catalyseur est utilisé selon un rapport molaire (co-catalyseur / métal du métallocène) allant de préférence de 0,5 à 20, de manière plus préférentielle de 1 à 10.

Selon l'un quelconque des modes de réalisation de l'invention, le système catalytique comprend de préférence un solvant hydrocarboné. Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné.

Lorsque le système catalytique est en solution, sa concentration est définie par la teneur en métal de métallocène dans la solution. La concentration en métal de métallocène a une valeur allant préférentiellement de 0,0001 à 0,05 mol/l, plus préférentiellement de 0,001 à 0,03 mol/l.

Un autre objet de l'invention est la préparation du système catalytique décrit ci-dessus.

Le procédé de préparation du système catalytique conforme à l'invention comprend les étapes a) et b) suivantes :
- a) faire réagir dans un solvant hydrocarboné le co-catalyseur et le métallocène,
- b) faire réagir le monomère diène conjugué de préformation au produit de réaction de l'étape a).

Le métallocène utilisé pour la préparation du système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande WO 2007054224 A2. Le métallocène peut être préparé de façon traditionnelle par un procédé analogue à celui décrit dans les documents EP 1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

L'étape a) correspond à l'étape d'activation, communément aussi appelée alkylation, du métallocène par le co-catalyseur; l'étape b) correspond à l'étape de préformation du système catalytique.

Le solvant hydrocarboné utilisé dans la synthèse du système catalytique est généralement de même nature chimique que le solvant de la solution catalytique définie précédemment, c'est-à-dire un solvant hydrocarboné aliphatique comme le méthylcyclohexane ou aromatique comme le toluène. Typiquement, le solvant hydrocarboné dans lequel le système catalytique est en solution provient de la préparation du système catalytique.
Dans l'étape a), au solvant hydrocarboné est ajouté généralement le co-catalyseur, puis le métallocène. L'étape a) a généralement lieu à une température allant de 20 à 80°C. Le temps de réaction de l'étape a) est compris de préférence entre 5 et 60 minutes, plus préférentiellement varie de 10 à 20 minutes.
L'étape b) est réalisée généralement à une température allant de 40 à 100°C, préférentiellement de 60 à 90°C. Le temps de réaction de l'étape b) varie typiquement de 1 heure à 24 heures, préférentiellement de 5h à 12 h. Dans l'étape b), on ajoute le monomère diène conjugué de préformation au produit de réaction de l'étape a).
L'étape b) peut être suivie d'une étape c) de dégazage pour éliminer le monomère diène conjugué de préformation qui n'aurait pas réagi au cours de l'étape b).

Comme toute synthèse faite en présence de composé organométallique, la synthèse a lieu dans des conditions anhydres sous atmosphère inerte aussi bien pour l'étape a) que pour l'étape b) et le cas échéant l'étape c). Typiquement, les réactions sont conduites à partir de solvants et de monomères anhydres sous azote ou argon anhydre. Les étapes a), b) et c) sont conduites généralement sous agitation.

Avant d'être utilisé par exemple en polymérisation, le système catalytique ainsi obtenu en solution peut être stocké sous atmosphère inerte, par exemple sous azote ou argon, notamment à une température allant de -20°C à la température ambiante (23°C).

Un autre objet de l'invention est un procédé de préparation d'un polymère qui comprend la polymérisation d'un monomère M en présence du système catalytique conforme à l'invention. Le monomère M est à distinguer du monomère de préformation utilisé dans la préparation du système catalytique dans l'étape b) : le monomère M peut être ou ne pas être de même nature chimique que le monomère utilisé dans l'étape b). Le monomère M est de préférence choisi dans le groupe des monomères constitués par les diènes conjugués, l'éthylène, les α-monooléfines et leurs mélanges. De manière plus préférentielle, le monomère M est un 1,3-diène ayant de préférence de 4 à 8 atomes de carbone, notamment le 1,3-butadiène ou l'isoprène, ou bien un mélange de 1,3-butadiène et d'éthylène.

Selon la microstructure et la longueur des chaînes polymères préparées par le procédé conforme à l'invention, le polymère peut être un élastomère.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. La charge monomère peut être introduite dans le réacteur contenant le solvant de polymérisation et le système catalytique ou inversement le système catalytique peut être introduit dans le réacteur contenant le solvant de polymérisation et la charge monomère. La polymérisation est conduite typiquement dans des conditions anhydres et en l'absence d'oxygène, en présence éventuelle d'un gaz inerte. La température de polymérisation varie généralement dans un domaine allant de 40 à 120°C, préférentiellement de 60 à 90°C.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation de systèmes catalytiques conformes à l'invention : exemples 1 à 6

Les systèmes catalytiques C1-C6 conformes à l'invention sont préparés selon le mode opératoire suivant.
Dans un réacteur contenant le solvant hydrocarboné méthylcyclohexane (MCH) ou toluène (Tol), on ajoute le co-catalyseur, le butyloctylmagnésium (BOMAG) puis le métallocène [Me₂Si(Flu)₂Nd(µ-BH₄)₂Li(THF)] dans les teneurs indiquées dans le tableau I. La durée d'activation est de 10 minutes, la température de réaction est de 20 °C. (étape a)). Ensuite, le monomère diène conjugué de préformation, le 1,3-butadiène, est introduit dans le réacteur dans les proportions indiquées dans le tableau I. La réaction de préformation se déroule à une température indiquée dans le tableau I, pendant une durée également indiquée dans le tableau I. A l'issue de l'étape b), le réacteur est dégazé et balayé à l'azote pour éliminer le 1,3-butadiène non converti. Le métallocène peut être préparé selon le mode opératoire décrit dans la demande de brevet WO 2007054224.

### 11.2-Préparation de systèmes catalytiques non conformes à l'invention : exemples 7, 8 et 9

Le système catalytique C7 non conforme à l'invention est préparé selon le procédé divulgué dans la demande de brevet WO 2007054224 et décrit ci-après :
Dans un réacteur contenant du toluène (Tol), on ajoute le co-catalyseur, le butyloctylmagnésium (BOMAG) puis le métallocène [Me₂Si(Flu)₂Nd(µ-BH₄)₂Li(THF)] dans les teneurs indiquées dans le tableau II. La durée d'activation est de 10 minutes, la température de réaction est de 20 °C. Ses conditions de préparation figurent dans le tableau II.

Le système catalytique C8 non conforme à l'invention est préparé de façon similaire au système catalytique C7 à l'exception du solvant qui est du méthylcyclohexane.

Le système catalytique C9 non conforme à l'invention est préparé selon le mode opératoire suivant :
Dans un réacteur contenant le solvant hydrocarboné méthylcyclohexane (MCH), on ajoute le co-catalyseur, le butyloctylmagnésium (BOMAG) puis le métallocène [Me₂Si(Flu)₂Nd(µ-BH₄)₂Li(THF)] dans les teneurs indiquées dans le tableau II. La durée d'activation est de 1h, la température de réaction est de 60 °C.

Les systèmes catalytiques C7, C8 et C9 ne sont pas conformes à l'invention en raison de l'absence de l'étape de préformation (étape b))) Ce sont des systèmes catalytiques connus de l'état de la technique, notamment de la demande de brevet WO 2007054224.

### II.3-Conditions de stockage des systèmes catalytiques :

Sauf indication contraire, les systèmes catalytiques C1 à C6 conformes à l'invention sont stockés immédiatement après leur préparation dans des bouteilles fermées hermétiquement sous atmosphère d'azote à -20°C.
Pour l'étude de la stabilité de l'activité catalytique au stockage d'un système catalytique conforme à l'invention, des bouteilles fermées hermétiquement sous azote contenant le système catalytique C1 sont aussi stockés à 4°C ou à 23°C.

Les systèmes catalytiques C7 et C8 non conformes à l'invention ne sont pas stockés et sont utilisés de suite dans la synthèse de polymère pour déterminer leur activité catalytique.

Le système catalytique C9 non conforme à l'invention, s'il n'est pas utilisé de suite dans la synthèse de polymère, est stocké immédiatement après sa préparation dans des bouteilles fermées hermétiquement sous atmosphère d'azote à 23°C.

### 11.4-Stabilité de l'activité catalytique des systèmes catalytiques: exemples 10 à 14

Les systèmes catalytiques C1 et C9 sont utilisés en polymérisation sans avoir été stockés après leur synthèse ou après avoir été stockés à température ambiante (23°C) ou à 4°C pendant des durées variables. Les activités catalytiques des systèmes catalytiques C1 et C9 sont déterminées, selon qu'ils ont été stockés ou pas, dans les conditions de polymérisation décrites ci-après.
La polymérisation est conduite à 80°C et à une pression initiale de 4 bars dans un réacteur en verre de 500 ml contenant 300 ml de solvant de polymérisation, le méthylcyclohexane, le système catalytique et les monomères, les monomères 1,3-butadiène et l'éthylène étant introduits sous la forme d'un mélange gazeux contenant 20% molaire de 1,3-butadiène. La réaction de polymérisation est stoppée par refroidissement et dégazage du réacteur. Le copolymère est récupéré par précipitation dans du méthanol, puis séché. La masse pesée permet de déterminer l'activité catalytique moyenne du système catalytique exprimée en kilogramme de copolymère synthétisé par mole de métal néodyme et par heure (kg/mol.h). Les résultats d'activité catalytique selon le temps et la température de stockage du système catalytique en solution figurent dans le tableau III.

Il est observé que l'activité catalytique du système catalytique C1 est la même avant ou après stockage. Même un stockage du système catalytique C1 de plus de 45 jours à 23°C ou de plus de 3 mois à 4°C n'a pas pour effet de diminuer son activité catalytique.
En revanche, on observe que le système catalytique C9 non conforme à l'invention ne présente pas une activité catalytique aussi stable au stockage à 23°C que C1. En effet, le système catalytique C9 présente une déchéance en activité catalytique de plus de 20% après seulement 10 jours de stockage à 23°C.
Le maintien de l'activité catalytique sur une longue période permet d'utiliser un seul et même lot de fabrication d'un système catalytique conforme à l'invention sur cette même période sans avoir à procéder à des phases de réajustement des paramètres de procédé de polymérisation et de remise en stabilité de l'outil de polymérisation au cours de cette période, tout en garantissant les spécifications du polymère à synthétiser.

### II.5-Comparaison de l'activité catalytique des systèmes catalytiques conformes à l'invention à celle des systèmes catalytiques de l'état de la technique : exemples 10, 13 et P1 à P7

Les systèmes catalytiques C1 à C6 conformes à l'invention et les systèmes catalytiques C7 à C9 non conformes à l'invention sont utilisés chacun dans la polymérisation d'un mélange d'éthylène et de 1,3-butadiène selon le mode opératoire décrit-ci après.
La polymérisation est conduite à 80°C et à une pression initiale de 4 bars dans un réacteur en verre de 500 ml contenant 300 ml de solvant de polymérisation, le méthylcyclohexane (exemple 10, exemple 13, exemples P1 à P5 et P7) ou le toluène (exemple P6), le système catalytique et les monomères, les monomères 1,3-butadiène et l'éthylène étant introduits sous la forme d'un mélange gazeux contenant 20% molaire de 1,3-butadiène. La réaction de polymérisation est stoppée par refroidissement et dégazage du réacteur. Le copolymère est récupéré par précipitation dans du méthanol, puis séché. La masse pesée permet de déterminer l'activité catalytique moyenne du système catalytique exprimée en kilogramme de copolymère synthétisé par mole de métal néodyme et par heure (kg/mol.h).
Les activités catalytiques moyennes calculées pour chacun des systèmes catalytiques figurent dans les tableaux III et IV. Les exemples 10, P1 à P5 sont conformes à l'invention, car ils mettent en œuvre un système catalytique conforme à l'invention (C1 à C6) ; les exemples 13, P6 et P7 ne sont pas conformes à l'invention, car ils mettent en œuvre un système catalytique de l'état de la technique (C7, C8 et C9).

Il est noté que pour un solvant hydrocarboné de polymérisation donné, le méthylcyclohexane, l'activité catalytique des systèmes catalytiques C1 à C6 est au moins égale, voire supérieure à celle du système catalytique de l'état de la technique (C8 ou C9). En effet l'activité catalytique des systèmes catalytiques conformes à l'invention déterminée dans les exemples P1 à P5 est 1.13 à 1.26 fois plus grande que celle de C8 déterminée dans l'exemple P7.

De plus, l'activité des systèmes catalytiques C1 à C6, utilisés pour une polymérisation dans le méthylcyclohexane est comparable, voire supérieure à celle du système catalytique de l'état de la technique C7 pour une polymérisation dans le toluène, déterminée dans l'exemple P6.

La préformation du système catalytique conforme à l'invention permet aussi d'améliorer la productivité des systèmes catalytiques pour la copolymérisation d'oléfine et de diène conjugué dans un solvant hydrocarboné aliphatique et d'obtenir des productivités en solvant hydrocarboné aliphatique similaires à celles obtenues en solvant hydrocarboné aromatique avec les systèmes catalytiques de l'état de la technique, voire supérieures.

Enfin, les systèmes catalytiques conformes à l'invention peuvent être synthétisés aussi bien en solvant aromatique (toluène, exemples 2 et 3) qu'en solvant aliphatique sans que ne soit affectée leur activité catalytique. En effet, l'activité catalytique de C2 et C3 (exemples P1 et P2) est comparable à celle de C1 et C4 à C6 synthétisés dans un solvant hydrocarboné aliphatique, le méthylcyclohexane (exemples 10 et P3 à P5).

**Tableau I**

| Exemple | Métallocène (mol/L) | Co-cata lyseur (mol/L) | Solvant hydrocarboné | Durée de préformation (h) | Température de préformation (°C) | Ratio molaire monomère/métal Nd | Système catalytique |
|---|---|---|---|---|---|---|---|
| 1 | 0.008 | 0.018 | MCH | 1 | 50 | 90 | C1 |
| 2 | 0,02 | 0,04 | Tol | 1 | 50 | 30 | C2 |
| 3 | 0,01 | 0,02 | Tol | 1 | 50 | 30 | C3 |
| 4 | 0,008 | 0,018 | MCH | 5 | 50 | 90 | C4 |
| 5 | 0,0048 | 0,01056 | MCH | 24 | 60 | 90 | C5 |
| 6 | 0,001 | 0,0022 | MCH | 5 | 60 | 90 | C6 |

**Tableau II**

| Exemple | Métallocène (mol/L) | Co-catalyseur (mol/L) | Solvant hydrocarboné | Durée d'activation (min) | Température d'activation (°C) | Système catalytique |
|---|---|---|---|---|---|---|
| 7 | 0,0001 | 0,0008 | Tol | 10 | 20 | C7 |
| 8 | 0,0001 | 0,0008 | MCH | 10 | 20 | C8 |
| 9 | 0,01 | 0,02 | MCH | 60 | 60 | C9 |

**Tableau III**

| Exemple | Système catalytique | Durée de stockage (jour) | Température de stockage | Solvant de polymérisation | Activité kg/mol.h |
|---|---|---|---|---|---|
| 10 | C1 | 0 | - | MCH | 146 |
| 11 | C1 | 45 | 23°C | MCH | 155 |
| 12 | C1 | 106 | 4°C | MCH | 153 |
| 13 | C9 | 0 | - | MCH | 141 |
| 14 | C9 | 10 | 23°C | MCH | 109 |

**Tableau IV**

| Exemple | Système catalytique | Solvant de polymérisation | Activité kg/mol.h |
|---|---|---|---|
| P1 | C2 | MCH | 153 |
| P2 | C3 | MCH | 158 |
| P3 | C4 | MCH | 163 |
| P4 | C5 | MCH | 166 |
| P5 | C6 | MCH | 171 |
| P6 | C7 | Tol | 159 |
| P7 | C8 | MCH | 135 |

## Revendications

1. Système catalytique préformé à base au moins :
• d'un monomère diène conjugué de préformation
• d'un métallocène de formule (I)
• d'un composé organométallique à titre de co-catalyseur,
{P(Cp¹)(Cp²)Y} (I)
- Y désignant un groupe comportant un atome de métal qui est une terre rare,
- Cp¹ et Cp², identiques ou différents, étant choisis dans le groupe constitué par les groupes fluorényles, les groupes cyclopentadiényles et les groupes indényles, les groupes étant substitués ou non substitués,
- P étant un groupe pontant les deux groupes Cp¹ et Cp², et comprenant un atome de silicium ou de carbone.

2. Système catalytique selon la revendication 1 dans lequel le co-catalyseur est un organomagnésien, de préférence un diorganomagnésien.

3. Système catalytique selon l'une quelconque des revendications 1 à 2 dans lequel le co-catalyseur est un composé organométallique comportant un groupe alkyle lié à l'atome de métal, préférentiellement un dialkylmagnésien ou un halogénure d'alkylmagnésien, plus préférentiellement le butyloctylmagnésium ou le chlorure de butylmagnésium.

4. Système catalytique selon l'une quelconque des revendications 1 à 3 dans lequel Cp¹ et Cp² sont identiques et sont choisis dans le groupe constitué par les groupes fluorényles substitués et le groupe fluorényle non substitué de formule C₁₃H₈.

5. Système catalytique selon l'une quelconque des revendications 1 à 4 dans lequel Cp¹ et Cp² représentent chacun un groupe fluorényle non substitué de formule C₁₃H₈.

6. Système catalytique selon l'une quelconque des revendications 1 à 5, dans lequel le symbole Y représente le groupe Met-G, avec Met désignant un atome de métal qui est une terre rare et G désignant un groupe comprenant le motif borohydrure BH₄ ou désignant un atome d'halogène X choisi dans le groupe constitué par le chlore, le fluor, le brome et l'iode.

7. Système catalytique selon l'une quelconque des revendications 1 à 6 dans lequel la terre rare est un lanthanide dont le numéro atomique varie de 57 à 71, de préférence le néodyme, Nd.

8. Système catalytique selon l'une quelconque des revendications 1 à 7 dans lequel le monomère diène conjugué de préformation est un 1,3-diène, de préférence le 1,3-butadiène.

9. Système catalytique selon l'une quelconque des revendications 1 à 8 dans lequel le rapport molaire du monomère diène conjugué de préformation sur le métal du métallocène a une valeur allant de 5 à 1000, préférentiellement de 10 à 500.

10. Système catalytique selon l'une quelconque des revendications 1 à 9 dans lequel le rapport molaire de co-catalyseur sur le métal du métallocène a une valeur allant de 0,5 à 20, préférentiellement de 1 à 10.

11. Système catalytique selon l'une quelconque des revendications 1 à 10, lequel système catalytique comprend un solvant hydrocarboné, de préférence est en solution dans ledit solvant hydrocarboné.

12. Système catalytique selon la revendication 11 dans lequel la concentration molaire en métal du métallocène dans le système catalytique a une valeur allant de 0,0001 à 0,05 mol/l, préférentiellement de 0,001 à 0,03 mol/l.

13. Procédé de préparation d'un système catalytique défini à l'une quelconque des revendications 1 à 12 qui comprend les étapes a) et b) suivantes :
- a) faire réagir dans un solvant hydrocarboné le co-catalyseur et le métallocène,
- b) faire réagir le monomère diène conjugué de préformation au produit de réaction de l'étape a).

14. Procédé de préparation d'un polymère qui comprend la polymérisation d'un monomère M en présence d'un système catalytique défini à l'une quelconque des revendications 1 à 12, le monomère M étant préférentiellement choisi dans le groupe des monomères constitués par les diènes conjugués, l'éthylène, les α-monooléfines et leurs mélanges.

15. Procédé selon la revendication 14 dans lequel le monomère M est un 1,3-diène, de préférence le 1,3-butadiène, l'isoprène ou leur mélange, ou est un mélange de 1,3-butadiène et d'éthylène.

## Patentansprüche

1. Vorgebildetes katalytisches System auf Basis von mindestens:
• einem konjugierten Dienmonomer für die Vorbildung,
• einem Metallocen der Formel (I),
• einer metallorganischen Verbindung als Cokatalysator,
{P(Cp¹) (Cp²)Y} (I)
- wobei Y für eine Gruppe steht, die ein Metallatom umfasst, bei dem es sich um ein Seltenerdmetall handelt,
- wobei Cp¹ und Cp², die gleich oder verschieden sind, aus der Gruppe bestehend aus Fluorenylgruppen, Cyclopentadienylgruppen und Indenylgruppen ausgewählt sind, wobei die Gruppen substituiert oder unsubstituiert sind,
- wobei P für eine Gruppe steht, die die beiden Gruppen Cp¹ und Cp² verbrückt und ein Siliciumoder Kohlenstoffatom umfasst.

2. Katalytisches System nach Anspruch 1, wobei es sich bei dem Cokatalysator um eine Organomagnesiumverbindung, vorzugsweise eine Diorganomagnesiumverbindung, handelt.

3. Katalytisches System nach einem der Ansprüche 1 bis 2, wobei es sich bei dem Cokatalysator um eine metallorganische Verbindung mit einer an das Metallatom gebundenen Alkylgruppe, vorzugsweise eine Dialkylmagnesiumverbindung oder ein Alkylmagnesiumhalogenid, weiter bevorzugt Butyloctylmagnesium oder Butylmagnesiumchlorid handelt.

4. Katalytisches System nach einem der Ansprüche 1 bis 3, wobei Cp¹ und Cp² gleich sind und aus der Gruppe bestehend aus substituierten Fluorenylgruppen und der unsubstituierten Fluorenylgruppe der Formel C₁₃H₈ ausgewählt sind.

5. Katalytisches System nach einem der Ansprüche 1 bis 4, wobei Cp¹ und Cp² jeweils für eine unsubstituierte Fluorenylgruppe der Formel C₁₃H₈ stehen.

6. Katalytisches System nach einem der Ansprüche 1 bis 5, wobei das Symbol Y für die Gruppe Met-G steht, wobei Met für ein Metallatom steht, bei dem es sich um ein Seltenerdmetall handelt, und G für eine Gruppe, die die Borhydrid-Einheit BH₄ umfasst, oder ein Halogenatom X, das aus der aus Chlor, Fluor, Brom und Iod bestehenden Gruppe ausgewählt ist, steht.

7. Katalytisches System nach einem der Ansprüche 1 bis 6, wobei es sich bei dem Seltenerdmetall um ein Lanthanid mit einer Ordnungszahl von 57 bis 71, vorzugsweise Neodym, Nd, handelt.

8. Katalytisches System nach einem der Ansprüche 1 bis 7, wobei es sich bei dem konjugierten Dienmonomer für die Vorbildung um ein 1,3-Dien, vorzugsweise 1,3-Butadien, handelt.

9. Katalytisches System nach einem der Ansprüche 1 bis 8, wobei das Molverhältnis von konjugiertem Dienmonomer für die Vorbildung zu Metall des Metallocens einen Wert im Bereich von 5 bis 1000, vorzugsweise von 10 bis 500, aufweist.

10. Katalytisches System nach einem der Ansprüche 1 bis 9, wobei das Molverhältnis von Cokatalysator zu Metall des Metallocens einen Wert im Bereich von 0,5 bis 20, vorzugsweise von 1 bis 10, aufweist.

11. Katalytisches System nach einem der Ansprüche 1 bis 10, wobei das katalytische System ein Kohlenwasserstofflösungsmittel umfasst und vorzugsweise in dem Kohlenwasserstofflösungsmittel gelöst ist.

12. Katalytisches System nach Anspruch 11, wobei die molare Konzentration an Metall des Metallocens in dem katalytischen System einen Wert im Bereich von 0,0001 bis 0,05 mol/l, vorzugsweise von 0,001 bis 0,03 mol/l, aufweist.

13. Verfahren zur Herstellung eines katalytischen Systems gemäß einem der Ansprüche 1 bis 12, das die folgenden Schritte a) und b) umfasst:
- a) Umsetzen des Cokatalysators und des Metallocens in einem Kohlenwasserstofflösungsmittel,
- b) Umsetzen des konjugierten Dienmonomers für die Vorbildung mit dem Umsetzungsprodukt aus Schritt a).

14. Verfahren zur Herstellung eines Polymers, das die Polymerisation eines Monomers M in Gegenwart eines katalytischen Systems gemäß einem der Ansprüche 1 bis 12 umfasst, wobei das Monomer M vorzugsweise aus der Gruppe der Monomere bestehend aus konjugierten Dienen, Ethylen, α-Monoolefinen und Mischungen davon ausgewählt wird.

15. Verfahren nach Anspruch 14, wobei es sich bei dem Monomer M um ein 1,3-Dien, vorzugsweise 1,3-Butadien, Isopren oder eine Mischung davon, oder um eine Mischung von 1,3-Butadien und Ethylen handelt.

## Claims

1. Preformed catalytic system based at least:
• on a preformation conjugated diene monomer,
• on a metallocene of formula (I),
• on an organometallic compound as cocatalyst,
{P(Cp¹)(Cp²)Y} (I)
- Y denoting a group comprising a metal atom which is a rare earth metal,
- Cp¹ and Cp², which are identical or different, being selected from the group consisting of fluorenyl groups, cyclopentadienyl groups and indenyl groups, the groups being substituted or unsubstituted,
- P being a group bridging the two Cp¹ and Cp² groups and comprising a silicon or carbon atom.

2. Catalytic system according to Claim 1, in which the cocatalyst is an organomagnesium compound, preferably a diorganomagnesium compound.

3. Catalytic system according to either one of Claims 1 and 2, in which the cocatalyst is an organometallic compound comprising an alkyl group bonded to the metal atom, preferably a dialkylmagnesium compound or an alkylmagnesium halide, preferably butyloctylmagnesium or butylmagnesium chloride, more preferably butyloctylmagnesium.

4. Catalytic system according to any one of Claims 1 to 3, in which Cp¹ and Cp² are identical and are selected from the group consisting of substituted fluorenyl groups and the unsubstituted fluorenyl group of formula C₁₃H₈.

5. Catalytic system according to any one of Claims 1 to 4, in which Cp¹ and Cp² each represent an unsubstituted fluorenyl group of formula C₁₃H₈.

6. Catalytic system according to any one of Claims 1 to 5, in which the symbol Y represents the group Met-G, with Met denoting a metal atom which is a rare earth metal and G denoting a group comprising the borohydride BH₄ unit or denoting a halogen atom X selected from the group consisting of chlorine, fluorine, bromine and iodine.

7. Catalytic system according to any one of Claims 1 to 6, in which the rare earth metal is a lanthanide, the atomic number of which varies from 57 to 71, preferably neodymium, Nd.

8. Catalytic system according to any one of Claims 1 to 7, in which the preformation conjugated diene monomer is a 1,3-diene, preferably 1,3-butadiene.

9. Catalytic system according to any one of Claims 1 to 8, in which the molar ratio of the preformation conjugated diene monomer to the metal of the metallocene has a value ranging from 5 to 1000, preferably from 10 to 500.

10. Catalytic system according to any one of Claims 1 to 9, in which the molar ratio of cocatalyst to the metal of the metallocene has a value ranging from 0.5 to 20, preferably from 1 to 10.

11. Catalytic system according to any one of Claims 1 to 10, which catalytic system comprises a hydrocarbon solvent, preferably is in solution in the said hydrocarbon solvent.

12. Catalytic system according to Claim 11, in which the molar concentration of metal of the metallocene in the catalytic system has a value ranging from 0.0001 to 0.05 mol/l, preferably from 0.001 to 0.03 mol/l.

13. Process for the preparation of a catalytic system defined in any one of Claims 1 to 12, which comprises the following stages a) and b):
- a) reacting, in a hydrocarbon solvent, the cocatalyst and the metallocene,
- b) reacting the preformation conjugated diene monomer with the reaction product from stage a).

14. Process for the preparation of a polymer which comprises the polymerization of a monomer M in the presence of a catalytic system defined in any one of Claims 1 to 12, the monomer M being preferably selected from the group of the monomers consisting of conjugated dienes, ethylene, α-monoolefins and their mixtures.

15. Process according to Claim 14, in which the monomer M is a 1,3-diene, preferably 1,3-butadiene, isoprene or their mixture, or a mixture of 1,3-butadiene and ethylene.
